# EUROPEAN PATENT SPECIFICATION

(11) **EP 3 819 144 B1**
(45) Date of publication and mention of the grant of the patent: **19.04.2023**
(21) Application number: 19207942.4
(22) Date of filing: 08.11.2019
(51) Int. Cl.: B60H 1/24, B60H 1/34

(54) **MULTIPLE ZONE AIR VENT**
MEHRFACHZONE-LUFTAUSSTRÖMER
DISPOSITIF D'ÉCOULEMENT D'AIR MULTI-ZONE

(43) Date of publication of application: 12.05.2021
(73) Proprietor: Volvo Car Corporation, 40531 Göteborg (SE)
(72) Inventor: PALM, Niklas, SE-412 53 GÖTEBORG (SE); GÖTHLIN, Jonas, SE-423 43 TORSLANDA (SE)
(74) Representative: Kransell & Wennborg KB

(56) References cited:
- EP-A1- 1 721 766
- DE-A1-102010 047 272
- DE-A1-102012 007 974
- GB-A- 1 040 469

## Description

### TECHNICAL FIELD

The present invention relates to a single multiple zone air vent for providing an air flow to a vehicle interior.

### BACKGROUND

Conventional air vents commonly include a set of vanes that are arranged in an opening defined by a frame. The vanes are adapted to redirect an air flow in a direction selected by an occupant of the vehicle. The air vents may be arranged in various locations in the vehicle interior such as in the instrument panel. For example, DE102010047272 discloses an air vent for vehicles. Further examples are EP1721766 which describes a ventilator for motor vehicles, DE102012007974 which discloses an air vent for motor vehicles, and GB 1040469 which discloses a device for delivering conditioned air into a passenger compartment.

A vehicle typically includes a plurality of air vents for providing an air flow to different locations in the vehicles. For example, a vehicle often includes a defroster air vent directed towards vehicle windows, air vents intended to provide an air flow towards vehicle occupants, and air vents providing for a general air circulation in the vehicle. Thus, the air vents consist of many different parts and mounting locations.

It would be desirable to reduce the complexity of the air vent system in vehicles to thereby reduce cost and maintenance efforts, but also for simplifying during assembly of the vehicle.

Accordingly, there is a need for improved air vents for vehicle interiors.

### SUMMARY

In accordance with the present invention there is provided a single multiple zone air vent for providing an air flow to a vehicle interior, as set out in independent claim 1. Preferred embodiments of the present invention are laid down in the appended dependent claims. Embodiments of the present invention alleviates at least some of the above drawbacks in prior art.

The inventors realized that a single air vent may include multiple zones having different characteristics. With a multiple zone air vent, the previously used multiple air vents can be replaced with a single multiple zone air vent.

The inventors propose that at least one outlet zone of the multiple zone air vent includes at least one air redirecting element that is adjustable only for vertically altering the direction of an air flow, and that at least one outlet zone is adapted to direct an air flow in a fixed direction.

Thus, the multiple zone air vent includes the function to in at least one outlet zone, being able to redirect the air flow from that zone with respect to a vertical axis. This provides for a user selectable air flow direction.

The multiple zone air vent further includes at least one outlet zone that provides a fixed direction air flow. This outlet zone may for example be used for providing air recirculation in the vehicle cabin.

Note that both the redirectable air flow and the fixed direction air flow are provided by the same air vent including multiple zones to enable for multiple functions and/or air flow directions. This is in contrast with prior art multiple separate air vents that include a vast number of parts which causes unnecessary cost and assembly efforts.

With embodiments of the present invention, a user may adjust the air flow direction into different directions with respect to a vertical axis, i.e. in a general up-down direction inside the vehicle, where "up" may be represented by a direction towards the vehicle ceiling and "down" may be represented by a direction towards the vehicle floor.

The air flow from the outlet zones including adjustable air redirecting elements may be adjustable only in the vertical direction. Accordingly, the air flow from the outlet zones including air redirecting elements is not adjustable in directions other than with different vertical degrees. Preferably, the air flow from the outlet zones including air redirecting elements is vertically directable but not horizontally directable along a side-to-side axis in the vehicle. Preferably, the outlet zones that include air redirecting elements may be absent of air redirecting elements able to redirect an air flow in directions other than with an alterable vertical component.

The multiple zone air vent is adapted to extend across the entire vehicle instrument panel. Thus, with the multiple outlet zones distributed across the entire instrument panel, the same multiple zone air vent may advantageously provide air flow that is fixed in direction, and air flow that is vertically adjustable.

The multiple outlet zones may be delimited only by partition wall members that define the outlet zones. Adjacent outlet zones share a partition wall member. Thus, the partition wall members divide the air vent into a preferred distribution of outlet zones. Further, the partition wall members may contribute in directing the air flow in a preferred direction. The partition wall members thus define the outlet zones distribution along one axis.

In order to define the outlet zones also in directions perpendicular to the axis along which the outlet zones may be distributed, a first wall member and a second wall member facing each other are provided. The first wall member and the second wall member may reach across all the outlet zones. The first wall member and the second wall member may provide an upper and lower boundary for the each of the outlet zones, whereas the partition wall members provide the side-ways boundary for the outlet zones.

Overall, using the herein proposed multiple zone air vent provides for using a single air vent instead of the multiple air vents used in prior art. The multiple zone air vent reduces the number of parts used for air vents in vehicle without compromising the air vent performance.

Further features of, and advantages with, the embodiments of the present invention will become apparent when studying the appended claims and the following description.

### BRIEF DESCRIPTION OF DRAWINGS

These and other aspects of the present invention will now be described in more detail, with reference to the appended drawings showing example embodiments of the invention, wherein:
FIG. 1 schematically illustrates a multiple zone air vent according to embodiments of the present invention;
Fig. 2 is schematically illustrating vertically adjustable air flow directions;
FIG. 3 is a conceptual illustration of a multiple zone air vent according to embodiments of the present invention;
FIG. 4 is an exploded view of the multiple zone air vent in FIG. 3; and
FIG. 5 conceptually illustrates a vehicle including a multiple zone air vent integrated in an instrument panel, according to embodiments of the present invention.

### DETAILED DESCRIPTION

In the present detailed description, various embodiments of a multiple zone air vent according to the present invention are described. However, the multiple zone air vent may be embodied in many different forms and should not be construed as limited to the embodiments set forth herein; rather, these embodiments are provided for thoroughness and completeness. Like reference characters refer to like elements throughout.

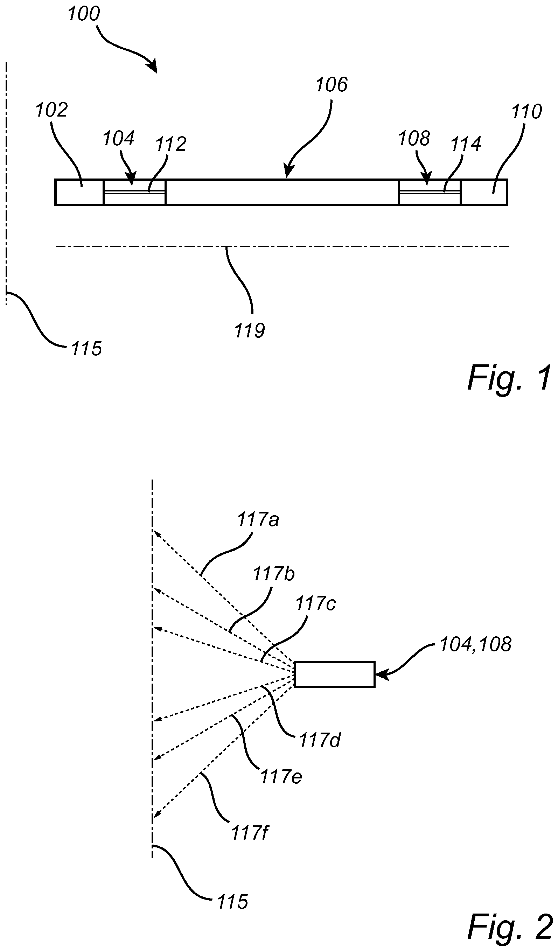

Fig. 1 schematically illustrates a multiple zone air vent 100 according to embodiments of the present invention. The multiple zone air vent 100 being integrable in a vehicle instrument panel for facing into the vehicle interior. The multiple zone air vent 100 comprises multiple outlet zones 102, 104, 106, 108, 110, wherein at least one outlet zone 104, 108 includes at least one air redirecting element 112, 114 that is adjustable for vertically altering the direction of an air flow. The vertical adjustment of the air flow means that the air flow is adjusted with respect to an axis parallel with the vertical axis 115, i.e. to approach alignment with the vertical axis, or deviate more from alignment with the vertical axis.

The inventors realized that the multiple air vents used in prior art systems may be replaced by a single multiple zone air vent and still provide the air flows required for an efficient climate control in the vehicle interior. For this, the multiple zones air vent includes both fixed direction air flow outlet zones, and outlet zones that are adapted to provide directable air flow. However, the directable air flow is only vertically directable. The directable air flow outlet zones may advantageously be arranged in front of respective front seats of the vehicle such that a user may receive the air flow. The user may adjust the direction of the air flow in the up-down direction in the vehicle, i.e. with respect to a vertical axis. The fixed direction air flow outlet zones may be configured to provide air flow for air circulation in the vehicle interior or other functions that do not require an adjustable air flow direction.

Fig. 2 is a schematic box-side-view of an outlet zone 104, 108 that includes at least one air redirecting element to thereby enable for adjusting the air flow direction. The direction of the air flow is vertically adjustable to a set of directions 117a-f with respect to the axis 115' parallel with the vertical axis 115 illustrated in fig. 1. The air flow is only vertically directable, and not directable along an axis 119, see fig. 1, that lies along the multiple zone air vent 100. The axis 119 may be a horizontal axis that intercepts the outlet zones 102, 104, 106, 108, and 110. More specifically, the air flow is not side-ways redirectable by air redirecting elements in the outlet zones 104, 108.

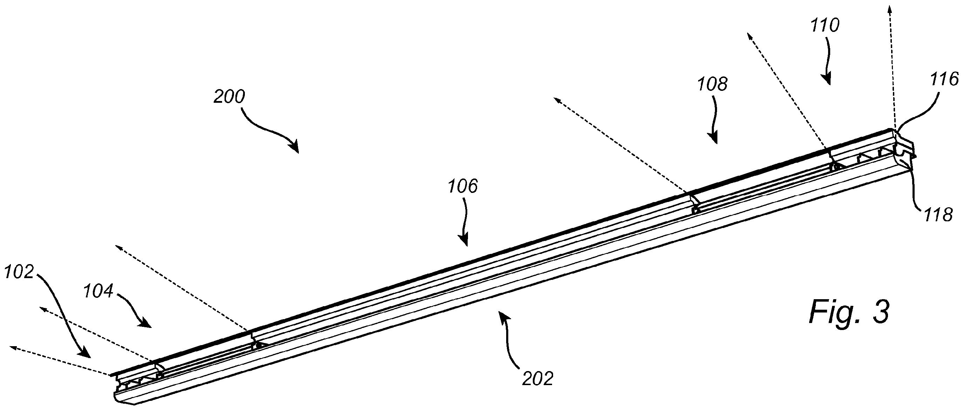

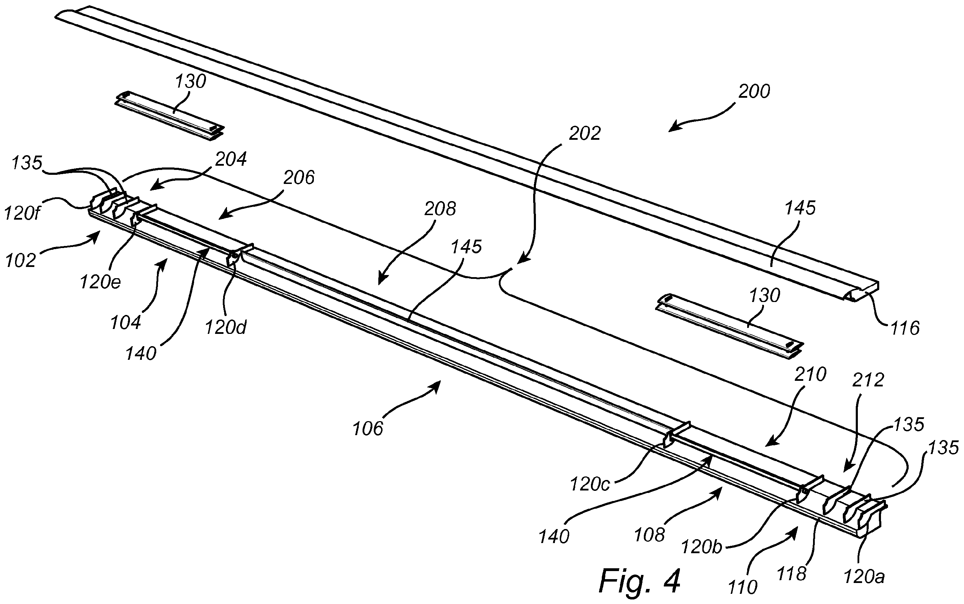

Fig. 3 conceptually illustrates a multiple zone air vent 200 according to embodiments of the present invention. Fig. 4 is an exploded view of the multiple zone air vent 200. The multiple zone air vent being integrable in a vehicle instrument panel for facing into the vehicle interior. The multiple zone air vent 200 comprising multiple outlet zones 102, 104, 106, 108, 110, wherein at least one outlet zone 104, 108 includes at least one air redirecting element, see e.g. fig. 1 or fig. 4, that is adjustable for vertically altering the direction of an air flow, and wherein at least one outlet zone 102, 106, 110 is adapted to direct air flow in a fixed direction.

In embodiments, at least two of the outlet zones is configured for providing an air ventilation functionality that is different from the air ventilation functionality provided by another one of the at least one outlet zones. For example, the outlet zones 104 and 108 may be configured for providing air flow towards vehicle occupants for providing comfort air flow functionality for the occupant. The outlet zones 102 and 110 may provide e.g. defrosting on side windows and the outlet zone 106 may provide diffuse air flow for introducing fresh air into the vehicle cabin. In some embodiments, at least one of the outlet zones are configured for providing an air ventilation functionality that is independent from the air ventilation functionality provided by another one of the at least one outlet zones. Thus, the functionality of at least one outlet zone may be operated without causing any alteration of the operation in at least one other of the outlet zones.

In embodiments, at least a first one 106 of the outlet zones is adapted to direct an air flow in a first fixed direction, and at least a second one 102, 110, of the outlet zones is adapted to direct an air flow in a second fixed direction, wherein the first fixed direction is different from the second fixed direction. The first fixed direction may for example be towards the vehicle ceiling and the second fixed direction may be towards vehicle side windows. The air flow that is directed towards the ceiling is intended to slowly diffuse from the ceiling and downwards in the vehicle interior, towards the vehicle floor. The fixed direction outlet zone may provide an air flow independent from the air flow provided by the outlet zones including air redirecting elements.

The multiple zone air vent 200 comprises a first wall member 116 and a second wall member 118 facing each other, the first wall member 116 and the second wall member 118 reach across all the outlet zones 102, 104, 106, 108, 110. The first wall member 116 and the second wall member 118 are arranged to define upper and lower boundaries for the all the outlet zones 102, 104, 106, 108, 110. For example, if the multiple zone air vent 200 is horizontally arranged, the first wall member 116 and the second wall member 118 are arranged to delimit the outlet zones 102, 104, 106, 108, 110 in the vertical direction. Accordingly, the first wall member 116 and the second wall member 118 are included in multiple outlet zones, thereby reducing the number of parts compared to using conventional multiple air vents.

As illustrated in fig. 3, the multiple outlet zones 102, 104, 106, 108, 110 are oriented side-by-side with respect to each other. In this way, the air flow from the different outlet zones 102, 104, 106, 108, 110 are better distributed in the vehicle interior. Furthermore, having all the outlet zones in a side-by-side distribution enables improved targeting for the air flow from each of the outlet zones 102, 104, 106, 108, 110. A side-by-side orientation of the outlet zones means that the outlet zones 104, 106, 108 have two closest neighboring outlet zones, except for the outlet zones 102, 110 at the end portions of the air vent 200, which only have one closest neighboring outlet zone.

When the multiple zone air vent is arranged in a vehicle, the multiple outlet zones 102, 104, 106, 108, 110 are arranged to be horizontally disposed.

Fig. 4 is an exploded view of the multiple zone air vent 200 in fig. 3. As is more clearly seen in fig. 4, the multiple zone air vent 200 comprises the first wall member 116 and the second wall member 118 facing each other, the first wall member 116 and the second wall member 118 reaches across all the outlet zones.

The multiple zone air vent comprises partition wall members 120a, 120b, 120c, 120d, 120e, 120f, arranged to define the multiple outlet zones 102, 104, 106, 108, 110. The partition wall members 120a, 120b, 120c, 120d, 120e, 120f, define the outlet zone distribution along an axis parallel with the general extension of the first wall member 116 and the second wall member 118. Accordingly, by using a set of partition wall members and the first wall member and the second wall member a plurality of outlet zones is conveniently formed, instead of using conventional multiple air vents requiring duplicates of all air vents parts. In one embodiment, the partition wall members 120a, 120b, 120c, 120d, 120e, 120f are arranged in contact with the first wall member 116 and the second wall member 118.

The partition wall members 120a-f are arranged to extend from the first wall member 116 to the second wall member 118, or vice versa. Thus, the partition wall members 120a-f are arranged to provide an air tight separation between adjacent outlet zones. Further, neighboring outlet zones share a partition wall member, to further reduce the number of parts of the multiple zone air vent. For example, the outlet zone 106 share partition wall member 120c with the outlet zone 108 and partition wall member 120d with the outlet zone 104. The first wall member 116, the second wall member 118 and the partition wall members 120a-f form a set of ducts, where each outlet zone includes a duct.

Preferably, the first wall member 116 is made in one piece. Further, the second wall member 118 is preferably made in one piece.

In embodiments, at least two outlet zones may include air redirecting elements 130 that are adjustable for vertically altering the direction of an air flow. For example, two outlet zones 108 and 104 may be arranged to provide an air flow towards vehicle occupants in the front seats of the vehicle.

The adjustable air redirecting elements 130 may be adapted provide an air flow that is directable in the vertical direction, but not in the horizontal direction, where the horizontal and vertical direction refers to when the multiple zone air vent is arranged in a vehicle with the outlet zones horizontally disposed. The horizontal direction refers to along a horizontal axis that lies cross-vehicle, i.e. sideways in the vehicle from left-to-right perpendicular to a general vehicle heading.

The multiple zone air vent illustrated in fig. 3 and fig. 4 includes a center outlet zone 106 for providing a fixed direction air flow, and two outlet zones 104, 108 neighboring the center outlet zone 106. The two neighboring outlet zones 104 and 108 includes air redirecting elements 130 that are adjustable for vertically altering the direction of an air flow from the at least one outlet zone.

The multiple outlet zones include a further fixed direction outlet zone 102 neighboring one 104 of the two outlet zones configured to provide air flow in alterable directions, and a further fixed direction outlet zone 110 neighboring the other one 108 of the two outlet zones configured to provide air flow in alterable directions.

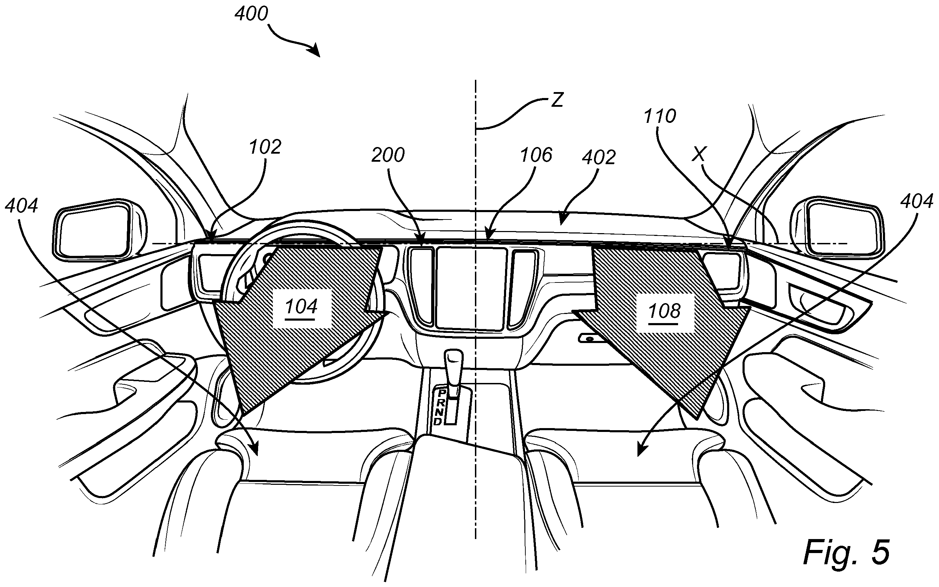

The outlet zones 104, 108 configured to provide air flow in alterable directions may alter the air flow direction along a vertical axis only, and not along other axes. Thus, the air redirecting elements 130 may be adapted to vertically steer the air flow in different directions. A vertical axis is here exemplified by the indicated Z in fig. 5, the air redirecting elements 130 are adapted to vertically steer the air flow with respect to an axis parallel with the vertical axis Z that is located directly in front of the respective outlet zone 104, 108. The outlet zones 104 and 108 are configured to not alter the air flow directions along the horizontal axis X that lies along in a cross-car direction perpendicular to an axis along a vehicle heading direction. In other words, the direction of the directable air flow is only adjustable in the Z-direction.

The multiple zone air vent may include various number of outlet zones, but preferably five, six, seven, or eight. At least two of the outlet zones may include air redirecting elements that are adapted to vertically alter the air flow direction. At least three outlet zones provide fixed direction air flows along an axis that do not intersect with a passenger when seated in a dedicated vehicle seat.

The outlet zones that are configured to provide fixed direction air flows may include fixed air redirecting elements 135. The fixed air redirecting elements 135 are configured to redirect incoming air from towards a target, such as for example a vehicle side window. Further, a fixed direction air flow may be defined by the shape of the first and second wall members 116, 118 in the specific outlet zone. In other words, the duct formed by the first and second wall members 116, 118, and partition wall members in the specific outlet zone may be directed in a specific direction, such as for example upwards towards the vehicle ceiling. In other possible implementations, the first wall member 116 and/or the second wall member 118 may include fixed air redirecting elements as part of the first wall member 116 and/or the second wall member 118 that direct the air flow in a preferred fixed direction. Here, a fixed air redirecting element 145 of the second wall member 118 is schematically shown for directing the air flow from the fixed direction air flow outlet zone 106. The fixed air redirecting elements 145 may be adapted to direct the air flow towards a vehicle ceiling.

Further, a fixed air redirecting element 145 of the first wall member 145 may also optionally be provided for defining a fixed direction air flow direction.

Fig. 5 illustrates a vehicle 400 comprising a multiple zone air vent 200 integrated in the instrument panel 402. The multiple zone air vent 200 reaches in a side-to-side orientation across substantially the entire width of the instrument panel 402 in the vehicle interior. In other words, the multiple zone air vent may be arranged from side-to-side across substantially the entire width of the vehicle interior.

The multiple zone air vent 200 has at least one outlet zone 104, 108 that includes adjustable air redirecting elements for altering the direction of an air flow from the at least one outlet zone, wherein the at least one outlet zone is located facing directly towards a respective vehicle occupant seating location 404.

Air redirecting elements may be provided in different forms, with the function to adjustably alter the direction of the air flow along different axes. The air redirecting elements are illustrated herein with example shapes that are purely exemplary and various shapes and configurations are within the scope of the appended claims. The general function of the air redirecting elements is to divert the air flow in a certain direction depending on the angular orientation of the air redirecting elements. Generally, the air redirecting elements may be provided as a vane or flaps being relatively planar although other possible shapes are possible. In the example embodiment illustrated in fig. 4 the air redirecting elements 130 are illustrated as horizontally disposed vanes that are rotationally attached to axes 140 for enabling the vanes to rotate about the axes 140. However, as noted above, this is only shown for example purposes and other arrangements for alterably redirecting an air flow is known per se to the skilled person and the example shown herein should not be construed as limiting the scope of the appended claims.

The air redirecting elements that are adjustable may be mechanically controlled by manual motion by a user, i.e. physically moving the air redirecting elements by means of moving handle connected to the air redirecting elements. Another possible implementation is that the air redirecting elements are movable by an electric motor that is electronically controlled from a control panel. There are many possible ways for causing a motion of the adjustable air redirecting elements for redirecting the air flow.

The outlet zones of the multiple zone air vent receive air flow via their openings 204, 206, 208, 210, 212 from the outside environment or air that has been circulated in the vehicle interior. The air flow may be controlled and provided from a heating, ventilation, and air conditioning system (HVAC-system).

The multiple zone air vent receives an air flow at openings on the rear side 202 and guides air flow through the multiple outlet zones defined by partition wall members and the first wall member and the second wall member into the vehicle interior. The openings 204, 206, 208, 210, 212 on the rear side may be defined by partition wall members and the first wall member and the second wall member. Each of the outlet zones has an associated opening.

The outlet zones may receive air independently of each other, although it may be possible that two or more outlet zones share a received air flow. The air flow may be provided to the multiple zone air vent through one of more air ducts connected to the rear side 202 of the multiple zone air vent, so that air flow may be received by the openings 204, 206, 208, 210, 212. Neighboring outlet zones may in some cases share a received air flow. For example, a spot zone 104, 108 including air redirecting elements may share an air flow with a neighboring defroster outlet zone 102, 110 arranged to provide a fixed direction air flow. When a user controls the air redirection elements to block the air flow into the vehicle interior, the defroster outlet zone may receive the air flow that was intended for the outlet zone including the redirecting elements.

Generally, an outlet zone including the air redirecting elements may herein be so called "spot-zones", i.e. arranged to provide an air flow directly towards a vehicle occupant seating position.

The vehicle may be a light-duty or heavy-duty vehicle, such as for example, a car a truck, a bus, a boat, etc.

The person skilled in the art realizes that the present invention by no means is limited to the preferred embodiments described above. On the contrary, many modifications and variations are possible within the scope of the appended claims.

In the claims, the word "comprising" does not exclude other elements or steps, and the indefinite article "a" or "an" does not exclude a plurality. A single processor or other control unit may fulfil the functions of several items recited in the claims. The mere fact that certain measures are recited in mutually different dependent claims does not indicate that a combination of these measured cannot be used to advantage. Any reference signs in the claims should not be construed as limiting the scope.

Various examples have been described.

## Claims

1. A single multiple zone air vent (200, 100) for providing an air flow to a vehicle interior, the multiple zone air vent (200, 100) being integrable in the vehicle instrument panel (402) for facing into the vehicle interior, the air vent (200, 100) comprising multiple outlet zones (102, 104, 106, 108, 110),
at least one outlet zone (104, 108) includes at least one air redirecting element (112, 114, 130) that is adjustable only for vertically altering the direction of an air flow only in the vertical direction, and at least one outlet zone (106, 102, 110) is adapted to direct an air flow in a fixed direction,
**characterized in that** the multiple outlet zones (102, 104, 106, 108, 110) include a center outlet zone (106) for providing a fixed direction air flow, and two outlet zones (108, 104) neighboring the center outlet zone (106),
wherein the two neighboring outlet zones (108, 104) include air redirecting elements (112, 114, 130) that are adjustable for altering the direction of an air flow from the respective outlet zone with respect to a single axis, and
wherein the multiple outlet zones (102, 104, 106, 108, 110) include a further fixed direction outlet zone (102) neighboring one (104) of the two outlet zones (108, 104) configured to provide an air flow in an alterable direction,
and a further fixed direction outlet zone (110) neighboring the other one (108) of the two outlet zones (108, 104) configured to provide an air flow in an alterable direction, and
wherein the multiple outlet zones (102, 104, 106, 108, 110) are arrangeable to be horizontally disposed side-by-side with respect to each other across substantially the entire width of the instrument panel in the vehicle interior.

2. The multiple zone air vent (200, 100) according to claim 1, wherein at least a first one (106) of the outlet zones: (102, 104, 106, 108, 110) is adapted to direct an air flow in a first fixed direction, and at least a second one (102, 110) of the outlet zones (102, 104, 106, 108, 110) is adapted to direct an air flow in a second fixed direction, wherein the first fixed direction is different from the second fixed direction.

3. The multiple zone air vent (200) according to any one of the preceding claims, comprising a first wall member (116) and a second wall member (118) facing each other, the first wall member (116) and the second wall member (118) reaches across all the outlet zones (102, 104, 106, 108, 110).

4. The multiple zone air vent (200) according to claim 3, comprising partition wall members (120a, 120b, 120c, 120d, 120e, 120f) arranged in contact with the first wall member (116) and the second wall member (118) to define the multiple outlet zones (102, 104, 106, 108, 110).

5. The multiple zone air vent (200) according to any one of claims 3 and 4, wherein at least one of the first wall member (116) and the second wall member (118) is made in one piece, or wherein the first wall member (116) is made in one piece and the second wall member (118) is made in one piece.

6. The multiple zone air vent (200) according to any one of the preceding claims, wherein at least one of the outlet zones (106, 102, 110) adapted to direct an air flow in a fixed direction is configured to direct an air flow only towards a vehicle ceiling, when the multiple zone air vent (200) is arranged in a vehicle interior.

7. The multiple zone air vent (200) according to claim 6, wherein the outlet zones (108, 104) that include the adjustable air redirecting elements (130) are arrangeable to provide an air flow towards a vehicle passenger.

8. A vehicle (400) comprising a multiple zone air vent (200, 100) according to any one of the preceding claims.

## Patentansprüche

1. Einzelne Mehrfachzonenentlüftung (200, 100) zum Vorsehen eines Luftstroms an einen Fahrzeuginnenraum, wobei die Mehrfachzonenentlüftung (200, 100) in der Fahrzeuginstrumententafel (402) integrierbar ist, um dem Fahrzeuginnenraum zugewandt zu sein, wobei die Entlüftung (200, 100) mehrere Auslasszonen (102, 104, 106, 108, 110) umfasst, wobei mindestens eine Auslasszone (104, 108) mindestens ein Luftumleitungselement (112, 114, 130) umfasst, das zum vertikalen Verändern der Richtung eines Luftstroms nur in vertikale Richtung einstellbar ist, und mindestens eine Auslasszone (106, 102, 110) dazu eingerichtet ist, einen Luftstrom in eine feste Richtung zu leiten,
**dadurch gekennzeichnet, dass** die Mehrfachauslasszonen (102, 104, 106, 108, 110) eine mittlere Auslasszone (106) zum Vorsehen eines Luftstroms mit fester Richtung, und zwei an die mittlere Auslasszone (106) angrenzende Auslasszonen (108, 104) umfasst,
wobei die zwei angrenzenden Auslasszonen (108, 104) Luftumleitungselemente (112, 114, 130) umfassen, die einstellbar sind, um die Richtung eines Luftstroms von der jeweiligen Auslasszone in Bezug zu einer einzelnen Achse zu verändern, und
wobei die mehreren Auslasszonen (102, 104, 106, 108, 110) eine weitere Auslasszone (102) mit fester Richtung umfassen, die an eine (104) der zwei Auslasszonen (108, 104) angrenzt, die dazu ausgelegt sind, einen Luftstrom in eine veränderbare Richtung vorzusehen, und eine weitere Auslasszone (110) mit fester Richtung, die an die andere (108) der zwei Auslasszonen (108, 104) angrenzt, die dazu ausgelegt sind, einen Luftstrom in eine veränderbare Richtung vorzusehen, und
wobei die mehreren Auslasszonen (102, 104, 106, 108, 110) dazu anordenbar sind, in Bezug zueinander im Wesentlichen über die gesamte Breite der Instrumententafel im Fahrzeuginnenraum horizontal nebeneinander angeordnet zu sein.

2. Mehrfachzonenentlüftung (200, 100) nach Anspruch 1, wobei mindestens eine erste (106) der Auslasszonen (102, 104, 106, 108, 110) dazu eingerichtet ist, einen Luftstrom in eine erste feste Richtung zu leiten, und mindestens eine zweite (102, 110) der Auslasszonen (102, 104, 106, 108, 110) dazu eingerichtet ist, einen Luftstrom in eine zweite feste Richtung zu leiten, wobei sich die erste feste Richtung von der zweiten festen Richtung unterscheidet.

3. Mehrfachzonenentlüftung (200) nach einem der vorstehenden Ansprüche, umfassend ein erstes Wandelement (116) und ein zweites Wandelement (118), die einander zugewandt sind, wobei das erste Wandelement (116) und das zweite Wandelement (118) über alle Auslasszonen (102, 104, 106, 108, 110) reichen.

4. Mehrfachzonenentlüftung (200) nach Anspruch 3, umfassend Trennwandelemente (120a, 120b, 120c, 120d, 120e, 120f), die in Kontakt mit dem ersten Wandelement (116) und dem zweiten Wandelement (118) angeordnet sind, um die mehreren Auslasszonen (102, 104, 106, 108, 110) zu definieren.

5. Mehrfachzonenentlüftung (200) nach einem der Ansprüche 3 und 4, wobei das erste Wandelement (116) und/oder das zweite Wandelement (118) einstückig gefertigt ist, oder wobei das erste Wandelement (116) einstückig gefertigt ist und das zweite Wandelement (118) einstückig gefertigt ist.

6. Mehrfachzonenentlüftung (200) nach einem der vorstehenden Ansprüche, wobei mindestens eine der Auslasszonen (106, 102, 110), die dazu eingerichtet ist, einen Luftstrom in eine feste Richtung zu leiten, dazu ausgelegt ist, einen Luftstrom nur in Richtung einer Fahrzeugdecke zu leiten, wenn die Mehrfachzonenentlüftung (200) in dem Fahrzeuginnenraum angeordnet ist.

7. Mehrfachzonenentlüftung (200) nach Anspruch 6, wobei die Auslasszonen (108, 104), die die einstellbaren Luftumleitungselemente (130) umfassen, dazu anordenbar sind, einen Luftstrom in Richtung eines Fahrzeuginsassen vorzusehen.

8. Fahrzeug (400), die Mehrfachzonenentlüftung (200, 100) nach einem der vorstehenden Ansprüche umfassend.

## Revendications

1. Buse de ventilation unique à zones multiples (200, 100) destinée à produire un écoulement d'air dans un habitacle de véhicule, la buse de ventilation à zones multiples (200, 100) pouvant être intégrée dans le tableau de bord (402) du véhicule de façon à être orientée vers l'habitacle du véhicule, la buse de ventilation (200, 100) comprenant de multiples zones de sortie (102, 104, 106, 108, 110), au moins une zone de sortie (104, 108) comprenant au moins un élément de redirection d'air (112, 114, 130) qui est réglable uniquement pour modifier verticalement la direction d'un écoulement d'air uniquement dans la direction verticale, et au moins une zone de sortie (106, 102, 110) étant propre à diriger un écoulement d'air dans une direction fixe,
**caractérisée en ce que** les multiples zones de sortie (102, 104, 106, 108, 110) comprennent une zone de sortie centrale (106) destinée à produire un écoulement d'air à direction fixe, et deux zones de sortie (108, 104) adjacentes à la zone de sortie centrale (106), les deux zones de sortie (108, 104) adjacentes comprenant des éléments de redirection d'air (112, 114, 130) qui sont réglables pour modifier la direction d'un écoulement d'air à partir de la zone de sortie respective relativement à un axe unique, et les multiples zones de sortie (102, 104, 106, 108, 110) comprenant une zone de sortie à direction fixe supplémentaire (102) adjacente à l'une (104) des deux zones de sortie (108, 104) conçues pour produire un écoulement d'air dans une direction modifiable, et une zone de sortie à direction fixe supplémentaire (110) adjacente à l'autre (108) des deux zones de sortie (108, 104) conçues pour produire un écoulement d'air dans une direction modifiable, et les multiples zones de sortie (102, 104, 106, 108, 110) pouvant être agencées de façon à être situées horizontalement côte à côte les unes par rapport aux autres sur sensiblement la totalité de la largeur du tableau de bord dans l'habitacle du véhicule.

2. Buse de ventilation à zones multiples (200, 100) selon la revendication 1, dans laquelle au moins une première (106) des zones de sortie (102, 104, 106, 108, 110) est propre à diriger un écoulement d'air dans une première direction fixe, et au moins une seconde (102, 110) des zones de sortie (102, 104, 106, 108, 110) est propre à diriger un écoulement d'air dans une seconde direction fixe, la première direction fixe étant différente de la seconde direction fixe.

3. Buse de ventilation à zones multiples (200) selon l'une quelconque des revendications précédentes, comprenant un premier composant formant paroi (116) et un second composant formant paroi (118) placés en regard l'un de l'autre, le premier composant formant paroi (116) et le second composant formant paroi (118) s'étendant sur l'ensemble des zones de sortie (102, 104, 106, 108, 110).

4. Buse de ventilation à zones multiples (200) selon la revendication 3, comprenant des composants formant parois de séparation (120a, 120b, 120c, 120d, 120e, 120f) placés en contact avec le premier composant formant paroi (116) et le second composant formant paroi (118) pour définir les multiples zones de sortie (102, 104, 106, 108, 110).

5. Buse de ventilation à zones multiples (200) selon l'une ou l'autre des revendications 3 et 4, dans laquelle au moins un du premier composant formant paroi (116) et du second composant formant paroi (118) est réalisé d'un seul tenant, ou dans laquelle le premier composant formant paroi (116) est réalisé d'un seul tenant et le second composant formant paroi (118) est réalisé d'un seul tenant.

6. Buse de ventilation à zones multiples (200) selon l'une quelconque des revendications précédentes, dans laquelle au moins une des zones de sortie (106, 102, 110) propres à diriger un écoulement d'air dans une direction fixe est conçue pour diriger un écoulement d'air uniquement vers un plafond du véhicule, lorsque la buse de ventilation à zones multiples (200) est installée dans un habitacle de véhicule.

7. Buse de ventilation à zones multiples (200) selon la revendication 6, dans laquelle les zones de sortie (108, 104) qui comprennent les éléments de redirection d'air réglables (130) peuvent être disposées de façon à produire un écoulement d'air vers un passager du véhicule.

8. Véhicule (400) comprenant une buse de ventilation à zones multiples (200, 100) selon l'une quelconque des revendications précédentes.
